Europäisches Patentamt

European Patent Office

Office européen des brevets

(11) Numéro de publication: **0 333 254**
**A2**

(12) **DEMANDE DE BREVET EUROPEEN**

(21) Numéro de dépôt: **89200560.4**

(22) Date de dépôt: **07.03.89**

(51) Int. Cl.⁴: **B60C 25/02**

(30) Priorité: **14.03.88 BE 8800290**

(43) Date de publication de la demande:
**20.09.89 Bulletin 89/38**

(84) Etats contractants désignés:
**BE DE ES FR GB IT NL**

(71) Demandeur: **du Quesne, Francis**
**Kleistraat 138**
**B-2630 Aartselaar(BE)**

(72) Inventeur: **du Quesne, Francis**
**Kleistraat 138**
**B-2630 Aartselaar(BE)**

(74) Mandataire: **Ottelohe, Jozef René**
**Bureau Ottelohe J.R. Postbus 3 Fruithoflaan 105**
**B-2600 Antwerpen (Berchem)(BE)**

(54) **Levier pour le démontage de pneus d'automobiles.**

(57) Le levier comporte un support (1) en forme d'équerre renversée dont la jambe horizontale (3) prend appui sur la joue (4) du pneu à démonter (5) et la jambe verticale (6) prend appui sur le talon (8) du pneu et la jante de roue (9), ladite jambe verticale (6) étant prolongée par un élément d'accrochage (10) pour être inséré entre le talon (8) du pneu et la jante de roue (9) afin de démonter le pneu, un bras (13) fixé sous un angle dans un plan vertical sur la jambe horizontale (3) dudit support (1), et une poignée (14) fixée à l'extrémité dudit bras.

Fig.5

EP 0 333 254 A2

## Levier pour le démontage de pneus d'automobiles.

L'invention se rapporte à un levier pour le démontage de pneus de roues d'automobiles, notamment d'un profil particulier et au moyen duquel il est possible de démonter les pneus rapidement, facilement et par un seul mouvement du levier.

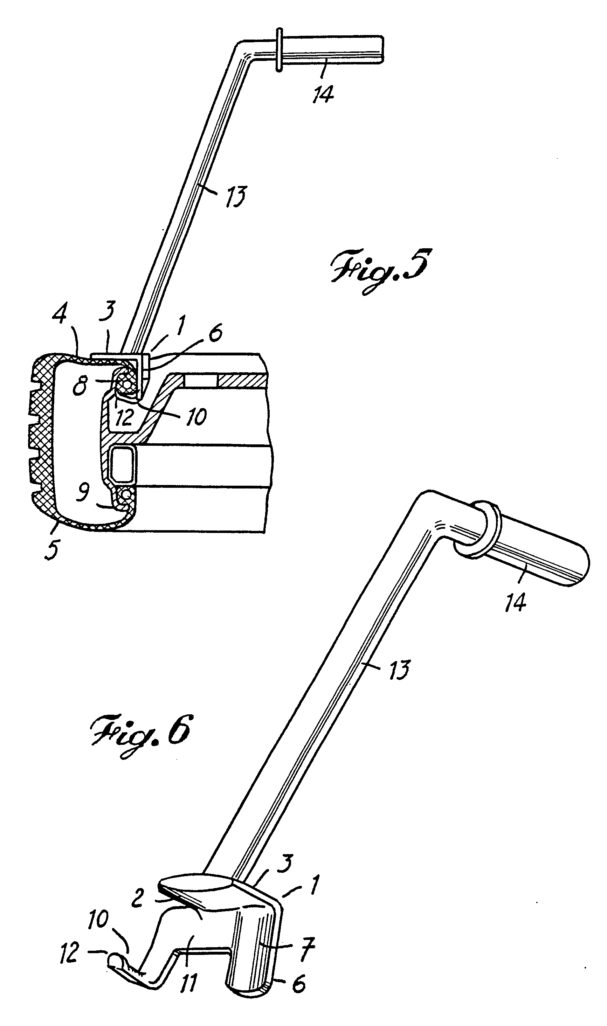

Dans un tel type de pneus et de roues, le pneu est monté par-dessus la jante de roue, tel que représenté en coupe transversale dans la figure 5 des dessins annexés, de sorte que la jante de roue soit invisible.

On connaît cependant un dispositif pour le démontage de pneus d'un tel type mais ce dispositif se compose d'un méchanisme à plusieurs bras pivotables. Ce dispositif présente toutefois l'inconvénient qu'il est d'une construction compliquée, coûteuse et est facilement sujet à dérangements.

En vue d'éliminer ces inconvénients, on a réalisé un levier simple qui permet par un seul mouvement du levier le démontage du pneu.

Selon la caractéristique essentielle de ce levier selon l'invention, celui-ci comporte un support en forme d'équerre renversée dont la jambe horizontale prend appui sur la joue du pneu à démonter et la jambe verticale prend appui sur le talon du pneu et la jante de roue, ladite jambe verticale étant prolongée par un élément d'accrochage pour être inséré entre le talon du pneu et la jante de roue afin de démonter le pneu, un bras fixé sous un angle dans un plan vertical sur la jambe horizontale dudit support, et une poignée fixée à l'extrémité dudit bras.

A titre d'exemple et sans caractère limitatif, il est donné ci-après la description d'une forme d'exécution préférée du levier conforme à l'invention. Cette description se réfère aux dessins annexés dans lesquels :

la fig. 1 est une vue de face du levier;

la fig. 2 est une vue latérale du levier;

la fig. 3 est une vue en plan du levier;

la fig. 4 est une vue en perspective de la partie inférieure du levier insérée entre le pneu et la jante de roue;

la fig. 5 est une coupe transversale partielle d'une jante de roue et d'un pneu à démonter, où le levier est représenté en position de travail;

la fig. 6 est une vue en perspective du levier.

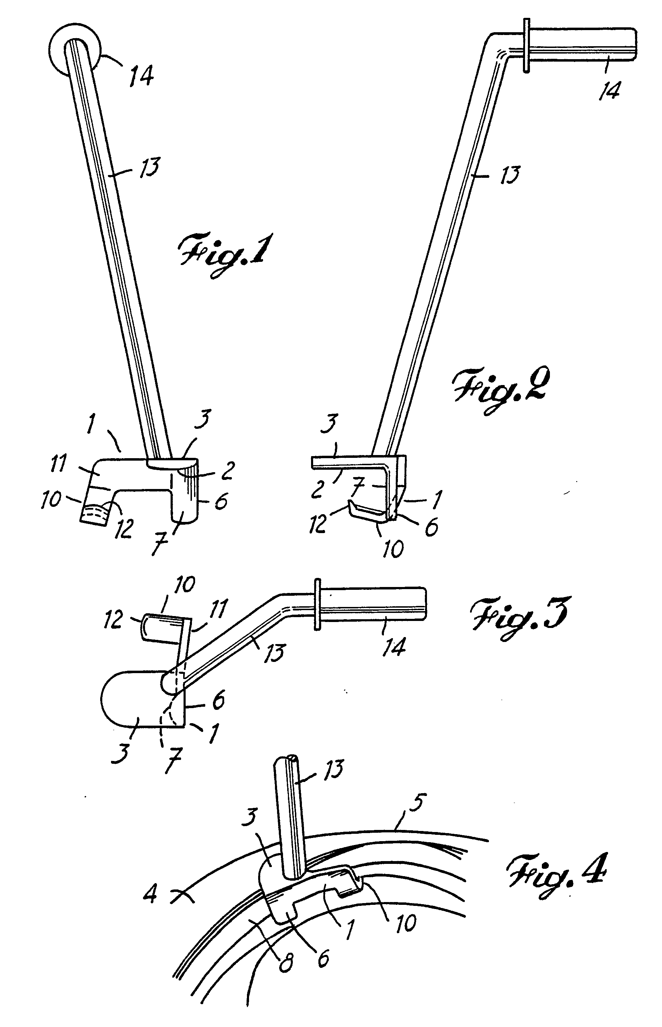

Dans ces figures on remarque que le levier comporte un support 1 en forme d'équerre renversée dont la surface inférieure 2 de la jambe horizontale 3 est courbée et est destinée à prendre appui sur la joue 4 du pneu 5 à démonter. La jambe verticale 6 du support 1 présente une surface courbée 7 prenant appui sur le talon 8 du pneu 5 et la jante de roue 9 pendant le démontage du pneu. La jambe verticale 6 est prolongée par un élément d'accrochage 10 destiné à être inséré entre le talon 8 du pneu 5 et la jante de roue 9, afin de pouvoir démonter le pneu. Cet élément d'accrochage présente un dos vertical 11 et une partie d'insertion 12 en saillie sous un angle par rapport au susdit dos 11 (fig. 2). La surface intérieure de la partie d'insertion 12 est légèrement courbée, de sorte que le talon du pneu puisse glisser sans peine par-dessus ladite surface. Dans un plan vertical et vu de haut, l'élément d'accrochage 10 est placé sous un angle par rapport à son dos 11 (fig. 3). Sur la jambe horizontale 3 du support 1 est soudé sous un angle dans deux plans verticaux perpendiculaires l'un à l'autre, un bras 13 dont l'extrémité libre est pourvue d'une poignée 14, qui de préférence est placée sous un angle par rapport au susdit bras.

Pour le démontage d'un pneu, on introduit l'élément d'accrochage 12 du levier entre la jante de roue 9 et le talon 8 du pneu, de sorte que la jambe horizontale 3 du levier soit placée sur la joue 4 du pneu 5 et la jambe verticale 6 repose contre le talon 8 du pneu (fig. 5), après quoi on exerce une traction sur la poignée 14 et le bras 13. Pendant le seul mouvement du levier, l'élément d'accrochage 12 bascule par rapport à la jambe horizontale 3 prenant appui sur la joue 4 du pneu 5 et s'introduit sous le talon 8 du pneu, tandis qu'en même temps, l'élément d'accrochage 12 bascule aussi par rapport à la jambe verticale 6 prenant appui sur le talon 8 du pneu 5 et tire ainsi le talon 8 du pneu hors de et par-dessus la jante de roue 9. Il suffit alors d'enlever le levier et de démonter ci-après le pneu à la main.

Il va de soi que le levier et ses parties pourront représenter n'importe quelles formes et dimensions.

## Revendications

1.- Levier pour le démontage de pneus d'automobiles, caractérisé par le fait qu'il comporte un support (1) en forme d'équerre renversée dont la jambe horizontale (3) prend appui sur la joue (4) du pneu à démonter (5) et la jambe verticale (6) prend appui sur le talon (8) du pneu et la jante de roue (9), ladite jambe verticale (6) étant prolongée par un élément d'accrochage (10) pour être inséré entre le talon (8) du pneu et la jante de roue (9) afin de démonter le pneu, un bras (13) fixé sous un angle dans un plan vertical sur la jambe horizontale (3) dudit support (1), et une poignée (14) fixée à l'extrémité dudit bras.

2.- Levier selon la revendication 1, caractérisé par le fait que par rapport à deux plans verticaux perpendiculaires l'un à l'autre, le bras (13) est fixé sous un angle sur la jambe horizontale (3) du support (1).

3.- Levier selon la revendication 1, caractérisé par le fait que l'élément d'accrochage (10) présente un dos vertical (11) et une partie d'insertion (12) en saillie sous un angle par rapport au susdit dos.

4.- Levier selon la revendication 1, caractérisé par le fait que dans un plan vertical, l'élément d'accrochage (10) est placé sous un angle par rapport à son dos (11).

5.- Levier selon la revendication 1, caractérisé par le fait que vu de haut, l'élément d'accrochage (10) est placé sous un angle par rapport au support (1).

6.- Levier selon la revendication 1, caractérisé par le fait que la surface inférieure (2) de la jambe horizon tale (3), la surface intérieure (7) de la jambe verticale (6) et la surface intérieure de l'élément d'accrochage (10), sont courbées.

7.- Levier selon la revendication 1, caractérisé par le fait que la poignée (14) est fixée sous un angle à l'extrémité du bras (13) et est parallèle à la jambe horizontale (3) du support (1).

*Fig.1*

*14*

*13*

*1*

*3*

*11*

*2*

*10*

*6*

*12*

*7*

*Fig.2*

*14*

*13*

*3*

*2*

*7*

*1*

*12*

*6*

*10*

*10*

*11*

*12*

*6*

*1*

*3*

*7*

*13*

*14*

*Fig.3*

*13*

*3*

*5*

*4*

*1*

*10*

*8*

*6*

*Fig.4*

EP 0 333 254 A2

Fig.5

Fig.6